# EUROPEAN PATENT SPECIFICATION

(11) **EP 2 949 493 B1**
(45) Date of publication and mention of the grant of the patent: **09.10.2019**
(21) Application number: 14170073.2
(22) Date of filing: 27.05.2014
(51) Int. Cl.: B60J 10/16, B60J 10/76, B60J 10/77, B60J 10/79, B60J 10/33

(54) **A sealing assembly for a frameless sliding window**
Dichtungsanordnung für eine rahmenlose gleitende Fensterscheibe
Joint d'étanchéité pour une vitre coulissante de fenêtre sans cadre

(43) Date of publication of application: 02.12.2015
(73) Proprietor: Volvo Car Corporation, 40531 Göteborg (SE)
(72) Inventor: Brodd, Joakim, 41321 Göteborg (SE); Brodin, Mats, 54132 Skövde (SE)
(74) Representative: Kransell & Wennborg KB

(56) References cited:
- EP-A2- 0 479 430
- EP-A2- 1 522 445
- DE-A1- 4 221 613
- DE-A1- 19 844 712
- JP-A- H0 740 748
- JP-A- S5 938 124
- JP-A- S63 305 020
- JP-A- 2009 269 554
- US-A- 5 050 349
- US-A1- 2012 079 772

## Description

### TECHNICAL FIELD

The invention relates to a sealing assembly for a frameless sliding window in a motor vehicle body. The invention can be applied in automotive vehicles, such as automobiles and heavy-duty vehicles, such as trucks, buses and construction equipment. Although the invention will be described with respect to an automobile, the invention is not restricted to this particular vehicle, but may also be used in other vehicles using frameless windows.

### BACKGROUND

Vehicle window seals or weather strips mounted in openings of a motor vehicle body are conventionally designed to enhance the tightness of the seal between the window and a door opening so as to improve sound insulation and waterproofing. Such vehicle window seals are know from DE 42 21 613 A1, US 5 050 349, JP 63-305020 and DE 198 44 712 A1.

Such seals typically comprises a sealing section, usually in the form of flexible lips to be brought into close contact with the window, a mounting base for mounting the seal onto the body of the motor vehicle, a bridging section, connecting the sealing section and the mounting base, and a hollow portion formed by the sealing section, the mounting base, and the bridging section. When the window or the door is closed, the region around the periphery of the window presses against the sealing section, which deforms the hollow portion. This deformation of the hollow portion brings the end or edge of the window into close contact with the sealing section so that the inside of the car is insulated from the outside, and tightness is assured.

However, for a frameless window the sealing function is not always effective along a front or rear section of a window as the direction of movement of the closing window is parallel to the seals. As a result situations may arise where the seal or a sealing lip cannot firmly press against the inside surface of the window, whereby the sealing force for the window is reduced and a satisfactory tightness performance cannot be obtained. In addition, the window may rattle during use of the vehicle as the air pressure acting on the outer surface of the window varies.

The object of the invention is to provide an improved sealing assembly for a frameless window that solves or mitigates the above problems.

### SUMMARY

An object of the invention is to provide a sealing assembly, which sealing assembly is intended to provide a frameless window seal which can enhance closure tightness against the window, improve sound insulation and prevent undesirable movement of a closed window. The object is achieved by a sealing assembly according to claim 1.

According to one embodiment, the invention relates to a sealing assembly for a frameless sliding window in a motor vehicle body. The sealing assembly comprising an upper, first portion attached to the vehicle body along an upper section of an opening for at least one window in the vehicle body. The first portion can be a weather strip extending over a part of an opening for at least one window, or over the full length of the upper section of an opening for all windows in the vehicle body. The sealing assembly also comprises at least one further, second portion extending between the upper section and a lower section of the opening. Such a second portion can be provided along a front and/or a rear edge of a window.

The first portion has a generally U-shaped cross-section comprising at least one sealing lip and a recess for receiving an upper part of the window. The U-shaped first portion opens in a downward direction to receive an upper section of the window. One or more elastic, deformable sealing lips are arranged to extend inwards from one or both legs of the U-shaped first portion into contact with an adjacent surface of the window. The sealing lips can be arranged singly or as opposed pairs and are co-extruded as an integral part of the first portion. The recess for receiving an upper part of the window is arranged into the intermediate base portion joining the legs of the U-shaped first portion.

The legs and the base portion of the first portion can comprise a thermoplastic polymeric structural material. A suitable material for this purpose is a structural grade polypropylene (PP). It is understood that comparably rigid thermoset materials can be employed. However, use of thermoset materials requires additional processing steps for recycling of the thermoset materials. In contrast, thermoplastic materials can be readily re-melted and reconfigured into subsequent products. These portions preferably are formed by a co-extrusion process that allows the sealing lips to be extruded at the same time. Any exposed surfaces of the first portion can be provided with a decorative trim surface, either co-extruded with the component or provided as a subsequent coating, to provide an integral weather strip and trim component. The sealing lips of the first and second portions can comprise a softer grade of thermoplastic vulcanizates (TPV), also termed elastomeric alloys (EA) or dynamically vulcanized thermoplastic elastomers (TPE). The first and second legs first of the first portion and the sealing lips are co-extruded with and bonded to the legs and comprises the same or similar materials. The sealing lips must comprise a material that allows them to conform to the shape of the movable window.

The first and second portions can be formed from a number of alternative plastic materials, for example, thermoplastics and thermoplastic elastomers (TPE). Depending on the hardness, TPE:s are sometimes categorized as thermoplastics and sometimes as elastomers. For purposes of this invention, no such distinction will be made, and hard and soft grades of plastic will all be referred to as TPE:s. TPE:s are commercially available in several different brands and types. Each type can be obtained in different grades having different properties such as hardness, tensile strength, compression, elongation, thermal stability and colorability. Selection of the appropriate TPE for a particular application depends on a suitable combination for such properties. Types of TPE that are particularly useful are styrenic block co-polymers, rubber polyolefin blends, elastomeric alloys, thermoplastic alloys, thermoplastic elastomeric alloys, thermoplastic isomers, thermoplastic polyurethanes, polyvinyl chlorides and blends thereof.

Polyvinyl chloride (PVC) based TPE:s are also suitable for window seals and are available in different grades and blends with other TPE:s and rubbers. Thermoplastic vulcanizates (TPV) with a relatively softer grade can be extruded to make profiles and seals. Thermoplastic vulcanizates comprises thermoplastic matrices, preferably crystalline, through which thermoset elastomers are generally uniformly distributed. Examples of thermoplastic vulcanizates include ethylene-propylene monomer rubber and ethylene-propylene-diene monomer rubber thermoset materials distributed in a crystalline polypropylene matrix. One example of a commercial TPV is Satoprene® thermoplastic rubber which is manufactured by Advanced Elastomer Systems and is a mixture of crosslinked EPDM particles in a crystalline polypropylene matrix. These materials have found utility in many applications which previously used vulcanized rubber, e.g., hoses, gaskets, and the like. Commercial TPV:s are typically based on vulcanized rubbers in which a phenolic resin or sulfur cure system is used to vulcanize, that is to crosslink, a diene (or more generally, a polyene) copolymer rubber by way of dynamic vulcanization, that is crosslinking while mixing (typically vigorously), in a thermoplastic matrix. TPV:s typically include a rubber component, a thermoplastic component, additive oil and other ingredients such as curing additives and the like. A variety of properties of TPVs are considered to be important, including but not limited to rebound, tensile strength and elongation, as well as varying degrees of softness or hardness.

According to the invention, the first portion comprises a guiding means arranged to contact outer surface of the window. The guiding means is arranged to guide and displace the window in a transverse direction towards the interior of the vehicle during a closing operation of the window. The closing operation is performed, for instance, when the vehicle door has been closed in order to close and seal the window opening. The transverse displacement is performed relative to a plane coinciding with the outer surface of the upper part of the window contacting the guiding means, and is substantially at right angles to the opening/closing direction of the window as the window is lifted into or lowered from its closed position. The transverse displacement causes at least a rear edge of the window is arranged to be forced into contact with the second portion. Depending on the location and the design of the window, a rear and/or a front edge can be displaced into contact with a corresponding sealing second portion. The second portion can comprise a suitable seal in the form of a sealing lip, a hollow section or similar, made from a suitable elastic, flexible material that can be deformed as the front and/or rear edge of the window is displaced towards the second portion.

The glass contacting sealing lips and the guide surface of the guiding means can include a low friction surface which may be comprised of any suitable low friction material such as silicone, polyurethane, low friction flocking, or polypropylene.

In order to achieve a transverse displacement of the window and in accordance with the invention the guiding means is rigid and undeformable. In order to reduce the frictional resistance between the window and the guiding means, the guiding means has a guiding surface comprising a low friction material. The low friction material can comprise a coating, an attached layer or a co-extruded material having suitable low friction properties.

The guiding surface is angled relative to the plane of the outer surface of the window and preferably extends a distance past the outer surface of the window in order to catch and guide the window towards the closed position. The guiding surface can be arranged at a suitable acute angle relative to the plane of the outer surface of the window, which angle should be less than 30° to reduce friction. Depending on the design of the U-shaped first portion and the tolerances for the lateral motion of the window during lifting, the angle can be selected between, for instance, 5° and 20°. The angle can also vary over the extension of the first portion.

As described above, the recess for receiving an upper part of the window is arranged in the U-shaped first portion. The recess has a cross-section corresponding to the cross-section of the upper part of the window. The width of the recess should be sufficient to allow the window to be lifted and lowered without frictional forces occurring between adjacent surfaces. The recess is arranged to retain the upper part of the window in its transversely displaced position and prevent any movement that could cause rattling during use of the vehicle. The opposing sides of the recess can be substantially parallel, requiring relatively close tolerances, or be converging over a distance corresponding to at least a part of the final upwards displacement of the window in order to wedge the window in place.

As described above, the transverse displacement of the upper part of the window during the final closing movement causes a rear and/or a front edge of the window to be forced into contact with the second portion to ensure proper sealing of the window opening. This displacement of the upper portion of the window can cause a rotation of the window over an angle of approximately 0,5° about an axis through the window adjacent and parallel with a sealing strip arranged at the lower edge of the window. In this way, the compressive force on the second portion will be greater at the upper part of the window.

The first portion can extend along a major portion of the opening for at least window in the vehicle body. Consequently, it can extend over a distance corresponding to at least the length of the upper part of a frameless window for a front door in a two-door vehicle, i.e. from the A-pillar to the B-pillar, or over at least the upper parts of the front and rear frameless windows in a four-door vehicle.

In addition, the first portion can be a weather strip that is integral with a trim component that extends along a major portion of the opening for at least one window in the vehicle body. Such trim components are often referred to a "bright trim" and can extend along the full length of the opening for windows in a vehicle body, from the A-pillar to the C-pillar. The integral weather strip and trim can be co-extruded to form a single component, in the form of a U-shaped profile complete with one or more elastic sealing lips, guiding means, a recess for receiving the window and outer bright trim. Alternatively, the trim can be applied separately, for instance as a coating, after the extrusion process.

Advantages of a sealing assembly according to the invention include enhancing of closure tightness against the window, improvement of sound insulation and prevention of undesirable movement of a closed window. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples. In the drawings:
- Figure 1: a sealing assembly according to the invention mounted to a vehicle;
- Figure 2: shows a cross section A-A (Figure 4) through a first part of a sealing assembly according to the invention
- Figure 3: shows the cross section A-A (Figure 4) through a part of a sealing assembly comprising a closed window,
- Figure 4: shows a schematic window opening comprising a sealing assembly according to the invention; and
- Figure 5: shows a cross section B-B (Figure 4) through a second part of a sealing assembly according to the invention

### DETAILED DESCRIPTION OF EXAMPLE EMBODIMENTS OF THE INVENTION

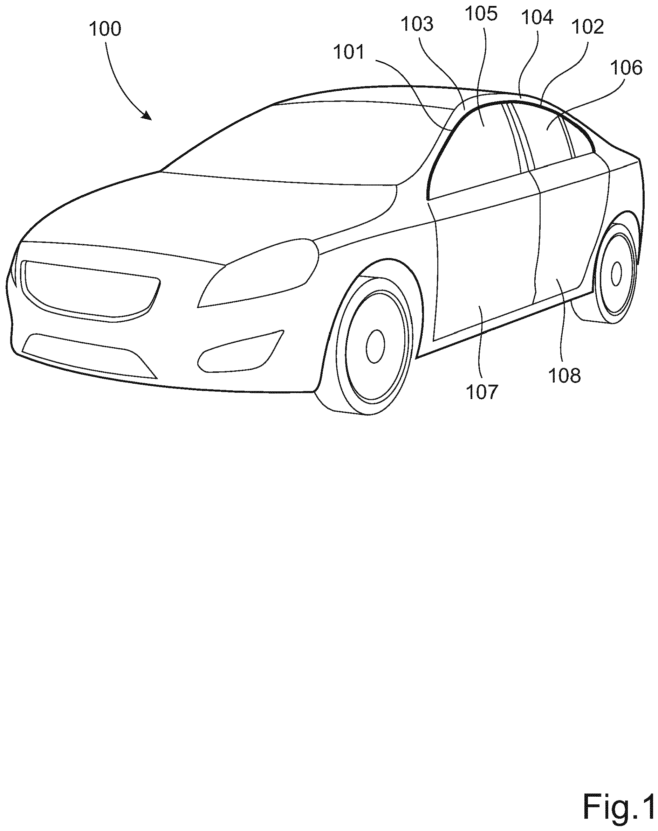

Figure 1 shows a weather strip 101, 102, forming a first portion of a sealing assembly according to the invention, mounted to a vehicle 100. The figure shows a first section of the weather strip 101 mounted on the header 103 of the window aperture 105 of a frameless front door 107, and a second section of the weather strip 102 mounted on the header 104 of the window aperture 106 of a frameless rear door 108. In this example the weather strip 101, 102 forms a single unit extending along the entire header 103, 104.

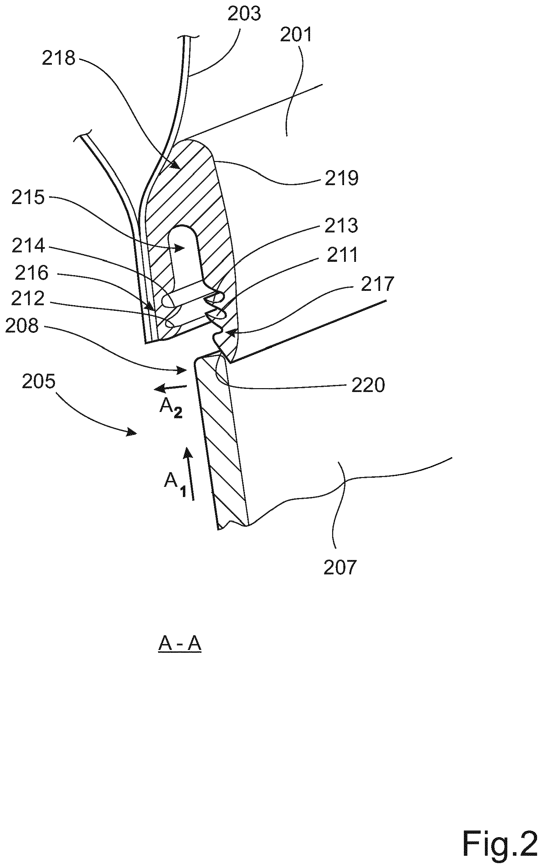

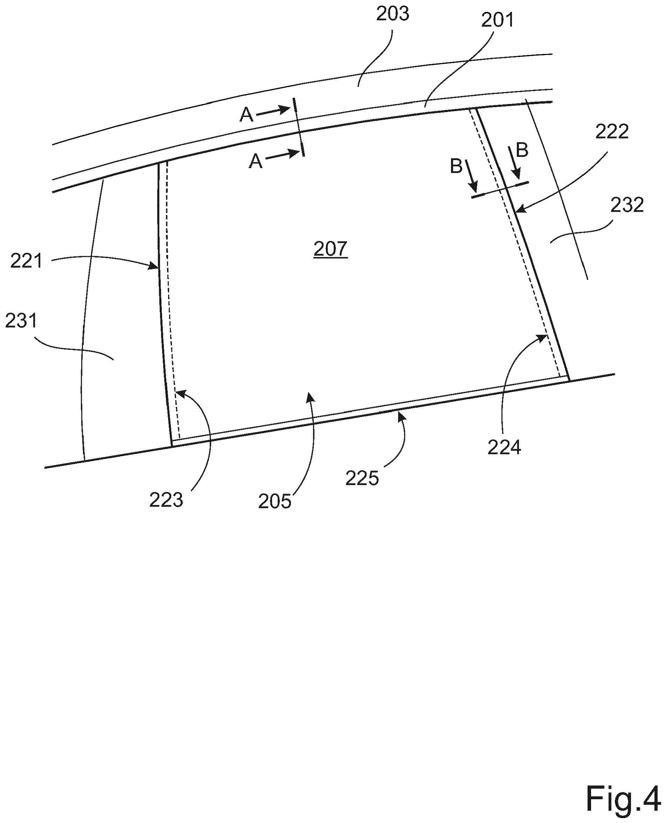

Figure 2 shows a cross section A-A (see Figure 4) through a weather strip 201 according to the invention. The weather strip 201 is attached to a header 203 of a window aperture 205 of a frameless door (not shown) by an adhesive or another suitable attachment means. The figure shows a window 207 being raised in the window aperture 205 as indicated by the arrow A1.

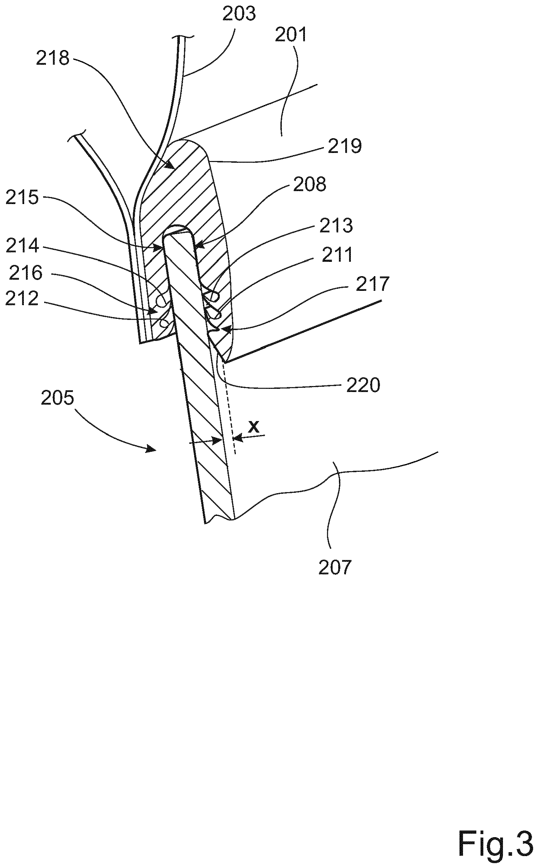

The weather strip 201 has a generally U-shaped cross-section comprising two pairs of opposing sealing lips 211, 212, 213, 214 and a recess 215 for receiving an upper part 208 of the window 207. The U-shaped weather strip 201 opens in a downward direction to receive an upper section of the window 207. The elastic, deformable sealing lips 211, 212, 213, 214 are arranged to extend inwards from the inner and outer legs 216, 217, respectively, of the U-shaped weather strip 201 to the window 207 when lifted into its closed position (see Figure 3). The sealing lips 211, 212, 213, 214 are arranged as opposed pairs and are co-extruded as an integral part of the weather strip 201. The recess 215 for receiving the upper part 208 of the window 207 is arranged into the intermediate base portion 218 joining the legs 216, 217 of the U-shaped weather strip 201. These portions preferably are formed by a co-extrusion process that allows the sealing lips to be extruded at the same time as the U-shaped profile. Any exposed surfaces of the weather strip 201 can be provided with an optional decorative trim surface 219, either co-extruded with the component or provided as a subsequent coating, to provide an integral weather strip and trim component.

The weather strip 201 comprises a guiding means 220 arranged to contact the outer surface of the window 207. The guiding means 220 is located at the end of the outer leg 217 of the weather strip 201 and is arranged to guide and displace the window 207 in a transverse direction, as indicated by the arrow A2, towards the interior of the vehicle during a closing operation of the window 207. The closing operation is performed, for instance, when the vehicle door has been closed in order to close and seal the window opening and involves lifting the window a distance of 10-15 mm towards its closed position. This procedure is reversed when the door is to be opened. In order to achieve a transverse displacement of the window and in accordance with the invention the guiding means 220 is rigid and undeformable.

In order to reduce the frictional resistance between the window 207 and the guiding means 220, the guiding means 220 has a guiding surface comprising a low friction material. The low friction material can comprise a coating, an attached layer or a co-extruded material having suitable low friction properties.

The guiding surface is angled relative to the plane of the outer surface of the window 207 and preferably extends a distance past the outer surface of the window in order to catch and guide the window towards the closed position. Figure 2 shows the relative positions of the guiding means 220 and the window 207 as they come into contact. The guiding surface of the guiding means 220 is arranged in a plane at a suitable acute angle relative to the plane of the outer surface of the window 207, which angle should be less than 30° to reduce friction forces. Depending on the design of the U-shaped weather strip 201 and the tolerances for the lateral motion of the window during lifting, the angle can be selected between, for instance, 5° and 20°. The angle can also vary over the extension of the weather strip 201. It is also possible to select or adapt the vertical extension of the guiding surface in accordance with the tolerances for lateral motion of the window during lifting.

Figure 3 shows a further cross section A-A (see Figure 4) through a weather strip 201, wherein the window 207 has reached its upper position. After contacting the guiding means 220, continued lifting of the window 207 will cause it to be displaced a distance x in a transverse direction towards the interior of the vehicle, as indicated by the arrow A2 in Figure 2. The transverse displacement is performed relative to a plane coinciding with the outer surface of the upper part of the window 208 contacting the guiding means 220, and is substantially at right angles to the closing direction of the window as the window 207 is lifted into its closed position. The size of the displacement distance x will vary with the size of the window opening and the desired sealing force between the window and the sealing assembly.

The recess 215 for receiving the upper part 208 of the window 207 is arranged in the intermediate base portion 218 joining the legs 216, 217 of the U-shaped weather strip 201. The recess 215 has a cross-section corresponding to the cross-section of the upper part 208 of the window 207. The width of the recess should be sufficient to allow the window to be lifted and lowered without frictional forces occurring between adjacent surfaces. The recess 215 is arranged to retain the upper part of the window in its transversely displaced position (see Figure 3) and to prevent any movement that could cause rattling during use of the vehicle. In Figure 3, the opposing sides of the recess 215 are shown substantially parallel, requiring relatively close tolerances. Alternatively, the opposing sides of the recess 215 can be converging over a distance corresponding to at least a part of the final upwards displacement of the window in order to wedge the window in place.

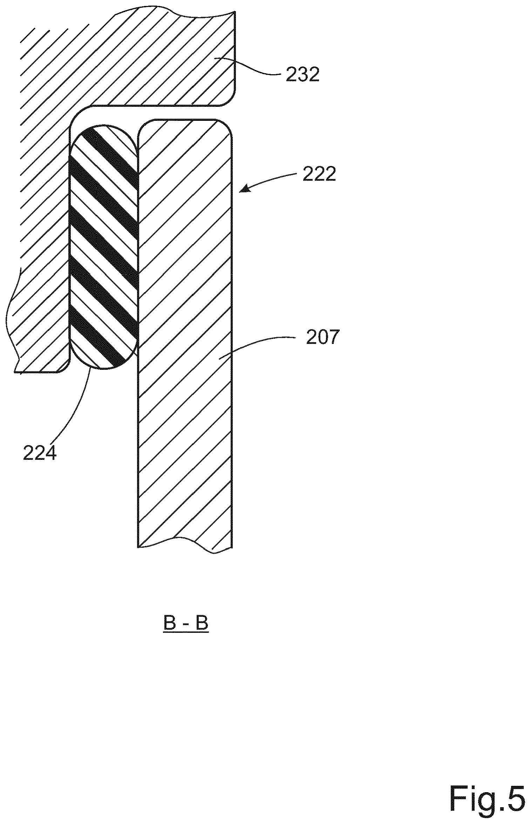

Figure 4 shows a schematic window opening 205 comprising a sealing assembly according to the invention. The figure shows the window in its closed position, wherein the upper portion of the window 207 is retained in a displaced position as shown in Figure 3. The transverse displacement caused by the guiding means (see Figure 3, "220") on the weather strip 201 causes a front and a rear edge 221, 222 of the window to be forced into contact with a respective sealing lip 223, 224 (see Figure 5). The sealing lips 223, 224 in this example are attached to a B-pillar 231 and a frame 232 delimiting the window 207 of a rear door. The displacement of the upper portion of the window 207 can cause a rotation of the window over an angle of approximately 0,5° about an axis through the window adjacent and parallel with a sealing strip 225 arranged at the lower edge of the window 207.

Figure 5 shows a cross section B-B (see Figure 4) through a sealing lip 231 forming a second portion of a sealing assembly according to the invention. The sealing lip 231 comprises a suitable seal in the form of a solid or a hollow section or similar, made from a suitable elastic, flexible material that can be deformed as the front and/or rear edge of the window is displaced towards the second portion. Figure 5 shows a solid section seal.

The transverse displacement of the rear edge of the window 207 is arranged to be forced into contact with the sealing lip 231, deforming it to create a tight seal between the window 207 and a frame 232 onto which the sealing lip 231 is attached. In the schematic example shown in Figure 5, the frame 232 forms a delimiting section for the window 207 of a rear door. A similar sealing lip (see Figure 4; "223") is provided for the front edge of the window 207. The front and rear edges of the window are simultaneously displaced into contact with their corresponding sealing lip.

It is to be understood that the present invention is not limited to the embodiments described above and illustrated in the drawings; rather, the skilled person will recognize that many changes and modifications may be made within the scope of the appended claims.

## Claims

1. Sealing assembly for a frameless sliding window in a motor vehicle body, the sealing assembly comprising an upper, first portion (201 attachable to the vehicle body along an upper section (203) of an opening (205) for at least one window (207) in the vehicle body; and at least one further, second portion (223, 224) extending between the upper section (203) and a lower section (225) of the opening (205), when the sealing assembly is mounted in the vehicle; wherein the first portion (201) has a U-shaped cross-section comprising at least one sealing lip (211, 212, 213, 214) and a recess (215) for receiving an upper part (208) of the window (207), **characterized in that** the first portion (201) comprises a rigid and undeformable guiding means (220) arranged to contact the outer surface of the window (207), and that
the guiding means (220) is arranged to guide and displace the window (207) in a transverse direction towards the interior of the vehicle during a closing operation of the window,
wherein at least a rear edge (221, 222) of the window is arranged to be forced into contact with the second portion (223,224),
when the sealing assembly is mounted in the vehicle.

2. Sealing assembly according to claim 1, **characterized in that** the guiding means (220) has a guiding surface comprising a low friction material.

3. Sealing assembly according to one of claims 1-2, **characterized in that** the guiding surface is angled relative to the plane of the outer surface of the window (207).

4. Sealing assembly according to one of claims 1-3, **characterized in that** the guiding surface is arranged at an acute angle of less than 30° relative to the plane of the outer surface of the window (207).

5. Sealing assembly according to one of claims 1-4, **characterized in that** the recess (215) has a cross-section corresponding to the cross-section of the upper part (208) of the window (207).

6. Sealing assembly according to one of claims 1-5, **characterized in that** the recess (215) is arranged to retain the upper part (208) of the window (207) in its displaced position.

7. Sealing assembly according to one of claims 1-6, **characterized in that** a front and a rear edge of the window is arranged to be forced into contact with a front and a rear second portion, respectively.

8. Sealing assembly according to one of claims 1-7, **characterized in that** the second portion (223, 224) comprises an elastic, flexible material that is deformable by a front and/or rear edge (221, 222) of the window (207).

9. Sealing assembly according to one of claims 1-8, **characterized in that** the first portion (101, 201) extends along a major portion of the opening (105, 106) for at least one window in the vehicle body (100).

10. Sealing assembly according to one of claims 1-9, **characterized in that** the first portion (101, 201) is integral with a trim component that extends along a major portion of the opening for at least one window in the vehicle body.

11. Weather strip (101, 102; 201) for a a frameless sliding window in a motor vehicle body, which weather strip (101, 201) comprises a U-shaped cross-section comprising at least one sealing lip and a recess for receiving an upper part of the window, when the weather strip is mounted in the vehicle,
**characterized in that** the weather strip (101, 102; 201) comprises a rigid and undeformable guiding means (220) arranged to contact the outer surface of the window (207), and that
the guiding means (220) is arranged to guide and displace the window (207) in a transverse direction towards the interior of the vehicle during a closing operation of the window (207),
when the weather strip is mounted in the vehicle.

12. Weather strip according to claim 11, **characterized in that** the guiding means has a guiding surface comprising a low friction material.

13. Weather strip according to one of claim 11 or 12, **characterized in that** the guiding surface is angled relative to the plane of the outer surface of the window (207).

14. Weather strip according to one of claims 11-13, **characterized in that** the recess is arranged to retain the upper part (208) of the window (207) in its displaced position.

15. Weather strip according to one of claims 11-14, **characterized in that** the weather strip (101, 102; 201) is integral with a trim component that extends along a major portion of the opening for at least one window in the vehicle body.

## Patentansprüche

1. Dichtungsanordnung für eine rahmenlose gleitende Fensterscheibe in einer Kraftfahrzeugkarosserie, wobei die Dichtungsanordnung einen oberen, ersten Abschnitt (201) umfasst, der an der Fahrzeugkarosserie entlang eines oberen Abschnitts (203) einer Öffnung (205) für mindestens eine Fensterscheibe (207) in der Fahrzeugkarosserie anbringbar ist; und mindestens einen weiteren, zweiten Abschnitt (223, 224), der sich zwischen dem oberen Abschnitt (203) und einem unteren Abschnitt (225) der Öffnung (205) erstreckt, wenn die Dichtungsanordnung in dem Fahrzeug montiert ist; wobei der erste Abschnitt (201) einen u-förmigen Querschnitt aufweist, der mindestens eine Dichtungslippe (211, 212, 213, 214) umfasst, und eine Vertiefung (215) zum Aufnehmen eines oberen Teils (208) der Fensterscheibe (207), **dadurch gekennzeichnet, dass** der erste Abschnitt (201) ein starres und nicht verformbares Führungsmittel (220) umfasst, das angeordnet ist, um die äußere Oberfläche der Fensterscheibe (207) zu kontaktieren, und dass
das Führungsmittel (220) angeordnet ist, um die Fensterscheibe (207) während einer schließenden Operation der Fensterscheibe in einer Querrichtung hin zum Inneren des Fahrzeugs zu führen und zu versetzen, wobei mindestens eine hintere Kante (221, 222) der Fensterscheibe angeordnet ist, um in Kontakt mit dem zweiten Abschnitt (223, 224) gedrängt zu werden, wenn die Dichtungsanordnung in dem Fahrzeug montiert ist.

2. Dichtungsanordnung nach Anspruch 1, **dadurch gekennzeichnet, dass** das Führungsmittel (220) eine Führungsoberfläche aufweist, die ein Material mit geringer Reibung umfasst.

3. Dichtungsanordnung nach einem der Ansprüche 1-2, **dadurch gekennzeichnet, dass** die Führungsoberfläche relativ zu der Ebene der äußeren Oberfläche der Fensterscheibe (207) abgewinkelt ist.

4. Dichtungsanordnung nach einem der Ansprüche 1-3, **dadurch gekennzeichnet, dass** die Führungsoberfläche relativ zu der Ebene der äußeren Oberfläche der Fensterscheibe (207) in einem spitzen Winkel von weniger als 30° abgewinkelt ist.

5. Dichtungsanordnung nach einem der Ansprüche 1-4, **dadurch gekennzeichnet, dass** die Vertiefung (215) einen Querschnitt aufweist, der dem Querschnitt des oberen Teils (208) der Fensterscheibe (207) entspricht.

6. Dichtungsanordnung nach einem der Ansprüche 1-5, **dadurch gekennzeichnet, dass** die Vertiefung (215) angeordnet ist, um den oberen Teil (208) der Fensterscheibe (207) in seiner versetzten Position zu halten.

7. Dichtungsanordnung nach einem der Ansprüche 1-6, **dadurch gekennzeichnet, dass** eine vordere und eine hintere Kante der Fensterscheibe angeordnet ist, um in Kontakt mit einem vorderen bzw. hinteren zweiten Abschnitt gedrängt zu werden.

8. Dichtungsanordnung nach einem der Ansprüche 1-7, **dadurch gekennzeichnet, dass** der zweite Abschnitt (223, 224) ein elastisches, flexibles Material umfasst, das von einer vorderen und/oder hinteren Kante (221, 222) der Fensterscheibe (207) verformbar ist.

9. Dichtungsanordnung nach einem der Ansprüche 1-8, **dadurch gekennzeichnet, dass** sich der erste Abschnitt (101, 201) entlang eines Hauptabschnitts der Öffnung (105, 106) für mindestens eine Fensterscheibe in der Fahrzeugkarosserie (100) erstreckt.

10. Dichtungsanordnung nach einem der Ansprüche 1-9, **dadurch gekennzeichnet, dass** der erste Abschnitt (101, 201) einstückig mit einer Verkleidungskomponente ausgeführt ist, die sich entlang eines Hauptabschnitts der Öffnung für mindestens eine Fensterscheibe in der Fahrzeugkarosserie erstreckt.

11. Dichtkeder (101, 102; 201) für eine rahmenlose gleitende Fensterscheibe in einer Kraftfahrzeugkarosserie, wobei der Dichtkeder (101, 102) einen u-förmigen Querschnitt umfasst, der mindestens eine Dichtungslippe und eine Vertiefung zum Aufnehmen eines oberen Teils der Fensterscheibe umfasst, wenn der Dichtkeder in dem Fahrzeug montiert ist, **dadurch gekennzeichnet, dass** der Dichtkeder (101, 102; 201) ein starres und nicht verformbares Führungsmittel (220) umfasst, das angeordnet ist, um die äußere Oberfläche der Fensterscheibe (207) zu kontaktieren, und dass das Führungsmittel (220) angeordnet ist, um die Fensterscheibe (207) während einer schließenden Operation der Fensterscheibe (207) in einer Querrichtung hin zum Inneren des Fahrzeugs zu führen und zu versetzen, wenn der Dichtkeder in dem Fahrzeug montiert ist.

12. Dichtkeder nach Anspruch 11, **dadurch gekennzeichnet, dass** das Führungsmittel eine Führungsoberfläche aufweist, die ein Material mit geringer Reibung umfasst.

13. Dichtkeder nach einem der Ansprüche 11 oder 12, **dadurch gekennzeichnet, dass** die Führungsoberfläche relativ zu der Ebene der äußeren Oberfläche der Fensterscheibe (207) abgewinkelt ist.

14. Dichtkeder nach einem der Ansprüche 11-13, **dadurch gekennzeichnet, dass** die Vertiefung angeordnet ist, um den oberen Teil (208) der Fensterscheibe (207) in seiner versetzten Position zu halten.

15. Dichtkeder nach einem der Ansprüche 11-14, **dadurch gekennzeichnet, dass** der Dichtkeder (101, 102; 201) einstückig mit einer Verkleidungskomponente ausgeführt ist, die sich entlang eines Hauptabschnitts der Öffnung für mindestens eine Fensterscheibe in der Fahrzeugkarosserie erstreckt.

## Revendications

1. Joint d'étanchéité pour une vitre coulissante de fenêtre sans cadre dans une carrosserie de véhicule automobile, le joint d'étanchéité comprenant une première partie supérieure (201) pouvant être fixée à la carrosserie de véhicule le long d'une section supérieure (203) d'une ouverture (205) pour au moins une vitre (207) dans la carrosserie de véhicule ; et au moins une seconde partie supplémentaire (223, 224) s'étendant entre la section supérieure (203) et une section inférieure (225) de l'ouverture (205), lorsque le joint d'étanchéité est monté dans le véhicule ; la première partie (201) ayant une section transversale en forme de U comprenant au moins une lèvre d'étanchéité (211, 212, 213, 214) et un évidement (215) pour recevoir une partie supérieure (208) de la vitre (207), **caractérisé en ce que** la première partie (201) comprend un moyen de guidage rigide et indéformable (220) conçu pour venir en contact avec la surface extérieure de la vitre (207), et **en ce que**
le moyen de guidage (220) est conçu pour guider et déplacer la vitre (207) dans une direction transversale vers l'intérieur du véhicule pendant une opération de fermeture de la vitre,
au moins un bord arrière (221, 222) de la vitre étant conçu pour être forcé en contact avec la seconde partie (223, 224), lorsque le joint d'étanchéité est monté dans le véhicule.

2. Joint d'étanchéité selon la revendication 1, **caractérisé en ce que** le moyen de guidage (220) a une surface de guidage comprenant un matériau à faible frottement.

3. Joint d'étanchéité selon l'une des revendications 1 et 2, **caractérisé en ce que** la surface de guidage est inclinée par rapport au plan de la surface extérieure de la vitre (207).

4. Joint d'étanchéité selon l'une des revendications 1 à 3, **caractérisé en ce que** la surface de guidage est disposée selon un angle aigu inférieur à 30° par rapport au plan de la surface extérieure de la vitre (207).

5. Joint d'étanchéité selon l'une des revendications 1 à 4, **caractérisé en ce que** l'évidement (215) a une section transversale correspondant à la section transversale de la partie supérieure (208) de la vitre (207).

6. Joint d'étanchéité selon l'une des revendications 1 à 5, **caractérisé en ce que** l'évidement (215) est conçu pour maintenir la partie supérieure (208) de la vitre (207) dans sa position déplacée.

7. Joint d'étanchéité selon l'une des revendications 1 à 6, **caractérisé en ce qu'**un bord avant et un bord arrière de la vitre sont conçus de sorte à être en contact forcé avec une seconde partie avant et une seconde partie arrière, respectivement.

8. Joint d'étanchéité selon l'une des revendications 1 à 7, **caractérisé en ce que** la seconde partie (223, 224) comprend un matériau élastique flexible qui est déformable par un bord avant et/ou arrière (221, 222) de la vitre (207).

9. Joint d'étanchéité selon l'une des revendications 1 à 8, **caractérisé en ce que** la première partie (101, 201) s'étend le long d'une partie principale de l'ouverture (105, 106) pour au moins une vitre dans la carrosserie de véhicule (100).

10. Joint d'étanchéité selon l'une des revendications 1 à 9, **caractérisé en ce que** la première partie (101, 201) est solidaire d'un composant de garniture qui s'étend le long d'une partie principale de l'ouverture pour au moins une vitre de la carrosserie de véhicule.

11. Bourrelet d'étanchéité (101, 102 ; 201) pour une vitre coulissante de fenêtre sans cadre dans une carrosserie de véhicule automobile, ledit bourrelet d'étanchéité (101, 201) comprenant une section transversale en forme de U comprenant au moins une lèvre d'étanchéité et un évidement pour recevoir une partie supérieure de la vitre, lorsque le bourrelet d'étanchéité est monté dans le véhicule,
**caractérisé en ce que** le bourrelet d'étanchéité (101, 102 ; 201) comprend un moyen de guidage rigide et indéformable (220) conçu pour venir en contact avec la surface extérieure de la vitre (207), et **en ce que**
le moyen de guidage (220) est conçu pour guider et déplacer la vitre (207) dans une direction transversale vers l'intérieur du véhicule pendant une opération de fermeture de la vitre (207), lorsque le bourrelet d'étanchéité est monté dans le véhicule.

12. Bourrelet d'étanchéité selon la revendication 11, **caractérisé en ce que** le moyen de guidage a une surface de guidage comprenant un matériau à faible frottement.

13. Bourrelet d'étanchéité selon la revendication 11 ou 12, **caractérisé en ce que** la surface de guidage est inclinée par rapport au plan de la surface extérieure de la vitre (207).

14. Bourrelet d'étanchéité selon l'une des revendications 11 à 13, **caractérisé en ce que** l'évidement est conçu pour maintenir la partie supérieure (208) de la vitre (207) dans sa position déplacée.

15. Bourrelet d'étanchéité selon l'une des revendications 11 à 14, **caractérisé en ce que** le bourrelet d'étanchéité (101, 102 ; 201) est solidaire d'un composant de garniture qui s'étend le long d'une partie principale de l'ouverture pour au moins une vitre de la carrosserie de véhicule.
